# EUROPÄISCHE PATENTSCHRIFT

(11) **EP 0 625 557 B1**
(45) Veröffentlichungstag und Bekanntmachung des Hinweises auf die Patenterteilung: **04.12.1996**
(21) Anmeldenummer: 93114036.2
(22) Anmeldetag: 02.09.1993
(51) Int. Cl.: C09J 133/06

(54) **Geruchsarmer Dispersionshaftklebstoff**
Low odour dispersion adhesive
Dispersion d'adhésif à faible odeur

(30) Priorität: 17.05.1993 DE 4316379
(43) Veröffentlichungstag der Anmeldung: 23.11.1994
(73) Patentinhaber: BASF Aktiengesellschaft, 67063 Ludwigshafen (DE)
(72) Erfinder: Dittrich, Uwe, Dr., D-67061 Ludwigshafen (DE); Stanger, Bernd, Dr., D-67373 Dudenhofen (DE); Neutzner, Josef, Dr., D-67434 Neustadt (DE); Pfoehler, Peter, Dr., D-67346 Speyer (DE); Mueller, Helmut, D-67657 Kaiserslautern (DE); Tuerk, Johannes, D-67459 Boehl-Iggelheim (DE)

(56) Entgegenhaltungen:
- CHEMICAL ABSTRACTS, vol. 105, no. 20, 17. November 1986, Columbus, Ohio, US; abstract no. 173952, 'pressure sensitve adhesives' Seite 65 ;

## Beschreibung

Die Erfindung betrifft eine wäßrige Dispersion, enthaltend ein Copolymerisat, aufgebaut aus

| | | |
|---|---|---|
| a) | 70 - 90 Gew.-% | eine C₂-C₁₀-Alkyl(meth)acrylats |
| b) | 5 - 20 Gew.-% | Methylacrylat |
| c) | 1 -10 Gew.-% | Methylmethacrylat |
| d) | 0 - 5 Gew.-% | einer C₈-C₁₂ vinylaromatischen Verbindung |
| e) | 0,5 - 5 Gew.-% | eines C₁-C₁₀-Hydroxyalkyl(meth)acrylats |
| f) | 0,1 - 2 Gew.-% | eines ethylenisch ungesättigten C₃-C₅-Carbonsäure oder Dicarbonsäure |
| g) | 0 - 3 Gew.-% | weiterer ethylenisch ungesättigter Verbindungen, |

wobei Vinylacetat und chlorhaltige Verbindungen ausgeschlossen sind, und mit der wäßrigen Dispersion beschichtete Substrate, wie Klebebänder, -folien und Etiketten.

Anforderungen, die an Copolymerisate im Falle der Verwendung als Klebstoffe, z. B. Haftklebstoffe, gestellt werden, sind vor allem eine gute Haftung auf Oberflächen (Adhäsion) und eine gute innere Festigkeit (Kohäsion), um einen möglichst festen Verbund der Verklebungen zu erreichen. Diese beiden Anforderungen können kaum gleichermaßen gut erfüllt werden, da viele Maßnahmen, die z. B. eine gute Kohäsion bewirken, sich wiederum nachteilig auf die Adhäsion auswirken.

Insbesondere haben sich auch Polyacrylate als Haftklebstoffe als geeignet erwiesen.

Wäßrige Dispersionshaftklebstoffe auf Polyacrylatbasis sind z. B. aus der DE-A 24 59 160 und DE-A 30 13 812 bekannt. Zur Verbesserung der Adhäsion enthalten die Polyacrylate im allgemeinen Vinylacetat. Vinylacetat hat jedoch den Nachteil, daß leicht Acetaldehyd abgespalten wird und es so zu einer Geruchsbelästigung kommen kann. Aus Chemical Abstracts Vol. 105, 1986, 173952 b sind Haftklebestoffe ohne Vinylacetat, mit Methylacrylat, bekannt.

Aufgabe der vorliegenden Erfindung waren daher Klebstoffe, insbesondere Haftklebstoffe auf Polyacrylatbasis, welche kein Vinylacetat enthalten und sowohl eine gute Adhäsion als auch Kohäsion aufweisen.

Demgemäß wurde die Verwendung der oben definierten wäßrigen Dispersion als Klebstoff sowie die oben definierte Dispersionen als solche, welche sich für die Verwendung als Klebstoff eignet, gefunden.

Die wäßrige Dispersionen enthalten ein Copolymerisat, welches aus den Monomeren a) bis g) aufgebaut ist.

Bei den Monomeren a) handelt es sich bevorzugt um C₄-C₁₀-Alkyl(meth)acrylate. Besonders bevorzugt handelt es sich um Alkylacrylate. Zu nennen sind beispielsweise n-Butylacrylat, n-Hexylacrylat und insbesondere 2-Ethylhexylacrylat.

Als vinylaromatische Monomere d) kommen z. B. α-Methylstyrol und insbesondere Styrol in Betracht.

Bevorzugte Hydroxyalkyl(meth)acrylate e) sind C₂-C₈-, besonders bevorzugt C₂-C₄-Hydroxyalkyl(meth)acrylate.

Genannt seine z. B. n-Hydroxyethylacrylat, n-Hydroxypropylacrylat und n-Hydroxybutylacrylat.

Monomere f) sind insbesondere Acrylsäure oder Methacrylsäure. Darüber hinaus kommen z. B. auch Maleinsäure oder Fumarsäure sowie deren Anhydride in Betracht.

Neben den Monomeren a) bis f) können die Copolymerisate noch weitere
Monomere g), welche von den Monomeren a) bis f) verschieden sind, enthalten.
Bei den weiteren Monomeren handelt es sich nicht um Vinylacetat oder chlor-haltige Monomere, wie Vinylidenchlorid.

Als Monomere g) genannt seien z. B. insbesondere solche mit Sulfat- oder Sulfonatgruppen, welche die Emulgierfähigkeit des Copolymerisats verbessern, z. B. Vinylsulfonsäure bzw. ihre Alkal- oder Erdalkalisalze, insbesondere Natrium-vinylsulfonat. Vinylester 3 und 4 C-Atome enthaltender Carbonsäuren sind wenig geeignet.

Der Gehalt dieser Monomeren liegt i.a. zwischen 0,1 und 3 Gew.-%. Weiterhin kommen als Monomere g) z. B. (Meth)acrylnitril, (Meth)acrylamid oder Vinylether in Betracht.

Es können auch Gemische der jeweils unter a) und d) bis g) genannten Monomeren eingesetzt werden.

Die Monomeren werden vorzugsweise so gewählt, daß die Glasübergangstemperatur des Copolymerisats geringer als 0°C, insbesondere geringer als -15°C liegt. Im allgemeinen liegt die Glasübergangstemperatur zwischen -15 und -45°C.

Die Glasübergangstemperatur läßt sich nach üblichen Methoden, z. B. aus der Messung des E-Moduls im Kriechversuch als Funktion der Temperatur oder mit der Differentialthermoanalyse (DTA) bestimmen (s. dazu A. Zosel, Farbe und Lack 82 (1976), 125-134).

Der K-Wert als Maß für das Molekulargewicht des Copolymerisats liegt vorzugsweise zwischen 60 und 100, besonders bevorzugt zwischen 80 und 100.

Der K-Wert wird gemessen an einer 1 gew.-%igen Lösung des Copolymerisats in Tetrahydrofuran bei 20°C und bestimmt nach Fikentscher (Cellulose-Chemie 13, 58 (1932)).

Die Herstellung der Copolymerisate erfolgt bevorzugt durch Emulsionspolymerisation.

Als wasserlösliche Initiatoren sind bei der Emulsionspolymerisation z. B. Peroxide wie Natrium-, Kalium- und Ammoniumperoxid, Wasserstoffperoxid oder Perborate geeignet.

Als Emulgatoren, bzw. Dispergierhilfsmittel können z. B. Alkalisalze von Fettsäuren, z. B. Natriumstearat oder Natriumoleat, Alkalisalze von sulfatierten Ölen, Alkalisalze von Sulfonsäuren, insbesondere Alkylsulfonsäuren, Alkalisalze von oxalkylierten Alkylphenolen, durch ein oder zwei Alkylsulfatgruppen substituierte Diphenylether sowie Polyadditionsprodukte von Alkylenoxiden wie Ethylenoxid, Propylenoxid oder deren Gemisch mit Fettsäuren, Fettalkoholen, Fettamiden oder Alkylphenolen eingesetzt werden.

Weiterhin können bei der Polymerisation auch Regler eingesetzt werden, durch die die Molmasse verringert wird (kettenübertragende Substanzen). Geeignet sind z. B. Verbindungen mit einer Thiolgruppe wie tert.-Butylmercaptan oder tert.-Dodecylmercaptan. Der Anteil dieser Regler kann insbesondere 0 bis 0,3 Gew.-%, bezogen auf das Copolymerisat, betragen.

Die Temperatur bei der Emulsionspolymerisation beträgt vorzugsweise 40 bis 100°C, insbesondere 70 bis 95°C.

Besonders bewährt für die Emulsionspolymerisation hat sich ein Zulauf-Verfahren, bei dem ein Teil der Monomeren, insbesondere bis zu 10 Gew.-%, zusammen mit Wasser, Emulgatoren, Initiatoren und gegebenenfalls Regler vorgelegt werden.

Der Rest der Monomeren kann in Wasser emulgiert bei der Polymerisationstemperatur gleichzeitig mit einer wäßrigen Lösung weiterer Initiatormengen zudosiert werden. Dabei kann die Zusammmensetzung der vorgelegten und des zudosierten Monomerengemischs gleich oder verschieden sein.

Die bei der Emulsionspolymerisation schließlich erhaltene wäßrige Dispersion hat vorzugsweise einen Feststoffgehalt von 40 bis 70 Gew.-%. Die wäßrigen Dispersionen der Copolymerisate eignen sich als Klebstoffdispersionen.

Insbesondere eignen sich die wäßrigen Copolymerisatdispersionen als Haftklebstoffe.

Für diese Verwendung können den wäßrigen Dispersionen weitere sog. klebrig-machende Harze zugesetzt werden, wie sie z. B. aus Adhesives Age, Juli 1987, Seite 19-23 oder Polym Mater. Sci. Eng., 61 (1989), Seite 588-592 bekannt sind. Bei diesen Harzen handelt es sich insbesondere um in Dispersion vorliegende natürliche oder synthetische Harzsäuren oder deren Ester. Das Gewichtsverhältnis von erfindungsgemäßem Polymerisat zu klebrig machendem Harz liegt vorzugsweise zwischen 5 : 1- bis 1 : 5, besonders bevorzugt zwischen 2 : 1 bis 1 : 1.

Als weitere Zusätze können die Dispersionen übliche Mengen an Verdickungsmitteln, Weichmachern und/oder Pigmenten enthalten.

Ferner können anorganische oder organische Füllstoffe als Zusätze verwendet werden. Beispiele für derartige Füllstoffe sind Kreide, Micro-Glaskugeln, mineralische Silikate oder Teflonpulver.

Zur Herstellung von Halfklebeerzeugnissen können die Dispersionen in üblicher Weise, z. B. durch Spritzen, Rakeln, Rollen, Gießen, Walzen oder Tauchen auf geeignete Substrate aufgetragen werden.

Auch ein indirekter Auftrag der Dispersionen` z. B. nach dem Transferverfahren unter Mitverwendung eines silikonisierten Papieres ist möglich. Nach dem Auftrag werden die beschichteten Substrate in üblicher Weise getrocknet.

Die Dispersionen können u. a. für die Herstellung von Klebeetiketten oder anderen selbstklebenden Artikeln wie Klebebändern oder Klebefolien verwendet werden. Als Träger kommen z.B. Folien aus Polyethylen, Polypropylen, Polyethylenglykolterephthalat, Polyvinylchlorid und Metall sowie Papier in Betracht.

Die erhaltenen Klebstoffschichten zeichnen sich sowohl durch eine gute Adhäsion zu den Substratoberflächen als auch durch eine gute Kohäsion aus. Eine Geruchsbelästigung, wie bei der Mitverwendung von Vinylacetat durch Abspaltung von Acetaldehyd häufig festzustellen ist, tritt nicht auf.

### Beispiel

Die in den folgenden Beispielen angegebenen Teile und Prozente beziehen sich auf das Gewicht.

### Copolymerdispersion A:

In einem druckfesten Rührkessel wurden 493,5 g Wasser, 14,1 g Natriumpyrophosphat, 7,0 g Natriumsalz der Ethylendiamintetraessigsäure und 3,5 g eines 40 %igen wäßrigen Na-Alkylsulfonates mit 12 bis 16 Kohlenstoffatomen gut gemischt. Nach dem Aufheizen der Mischung auf 80°C wurde eine Aufschlämmung von 3,5 g Natriumpersulfat in 47 g Wasser in den Rührkessel gegeben.

In einem Zulaufgefäß wurde vorher folgende Monomerenemulsion hergestellt (Zulauf I):
- 1484 g: Wasser
- 112,8 g: einer 35 %igen Lösung des Na-Salzes des Schwefelsäureesters von ethoxiliertem Nonylphenol (25 Ethylenoxideinheiten)
- 3,5 g: t-Dodecylmercaptan
- 70,9 g: Acrylsäure (97 %ig)
- 5881,6 g: 2-Ethylhexylacrylat
- 57,0 g: Na-Vinylsulfonat
- 850,3 g: Methylacrylat
- 212,6 g: Methylmethacrylat
- 70,9 g: 2-Hydroxypropylacrylat
- 0,0035 g: Hydrochinonmonomethylether

In einem weiteren Zulaufgefäß wurde eine Lösung von 52,8 g Natriumpersulfat in 705 g Wasser bereitgehalten (Zulauf II). Zu der bei 80°C gehaltenen Vorlage im Rührkessel wurde Zulauf I gegeben. Die Zulaufgeschwindigkeit (Volumen/Zeit) wurde im Lauf der ersten halben Stunde auf das ca. 2,5-fache der Anfangsgeschwindigkeit gesteigert und dann konstant gehalten.

Gleichzeitig mit Zulauf I wurde Zulauf II gleichmäßig innerhalb von 5 Stunden in den Rührkessel gegeben. Nach Beendigung der Zuläufe I und II wurde die Temperatur des Rührkessels noch 1 Stunde auf 80°C gehalten, dann abgekühlt. Man erhielt eine 60 gew.%ige, koagulat- und stippenfreie Polymer-Dispersion, die als Haftkleber-Rohstoff geeignet ist.

Die Herstellung der Copolymerdispersionen B - D erfolgte wie bei Copolymer A.

Die Zusammensetzung der Monomeren ist in der Tabelle 1 angegeben.

**Tabelle 1 -**

| Zusammensetzung der Copolymeren in Gew.-% | | | | | | | |
|---|---|---|---|---|---|---|---|
| Copolymer | EHA | BA | MA | VAc | MMA | AS | HPA |
| A | 83 | - | 12 | - | 3 | 1 | 1 |
| B* | 83 | - | - | 12 | 3 | 1 | 1 |
| C | - | 83 | 12 | - | 3 | 1 | 1 |
| D* | - | 83 | - | 12 | 3 | 1 | 1 |

| | | | | | | | |
|---|---|---|---|---|---|---|---|
| * zum Vergleich | | | | | | | |

### Abkürzungen

- EHA:: 2-Ethylhexylacrylat
- BA:: n-Butylacrylat
- MA:: Methylacrylat
- VAc:: Vinylacetat
- MMA:: Methylmethacrylat
- AS:: Acrylsäure
- HPA:: Hydroxypropylacrylat

### Anwendungstechnische Prüfung

Zur Prüfung der anwendungstechnischen Eigenschaften wurden die Dispersionen mit einem Kolophoniumharz gemischt und die Abmischungen mit einem Auftragsgewicht von ca. 20 g/m² auf Etikettenpapier (80 g/m², Fa. Hering) gerakelt und die beschichtenen Folien 3 Minuten bei 90°C im Umluft-Trockenschrank getrocknet. Die beschichteten Folien wurden dann in 2 cm breite Prüfstreifen geschnitten.

Zur Bestimmung der Scherfestigkeit wurden die Klebestreifen mit einer verklebten Fläche von 0,5 x 0,5 Zoll auf ein chromiertes V2A-Prüfblech geklebt, mit einer 1 kg schweren Rolle 1 mal angerollt, 20 min gelagert und anschließend hängend mit einem 0,5 kg Gewicht belastet. Das Maß für die Scherfestigkeit war die Zeit bis zum Abfallen des Gewichts; es wurde jeweils der Durchschnitt aus 5 Messungen berechnet. Bei diesen Messungen wurde die Klebeschicht zerstört (Kohäsionsbruch).

Die Scherfestigkeit wurde bei 23°C bestimmt.

Bei der Bestimmung der Schälfestigkeit (Adhäsion) wurde jeweils ein 2,0 cm breiter Klebestreifen auf ein chromiertes V2A-Prüfblech geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche (V2A-Stahl) abgezogen und der dazu benötigte Kraftaufwand gemessen. Das Maß für die Schälfestigkeit war die Kraft in N/2 cm, die sich als Durchschnittswert aus fünf Messungen ergab.

Die Schälfestigkeit wurde 24 Stunden nach der Verklebung bestimmt.

Die Ergebnisse sind in der Tabelle dargestellt.

**Tabelle**

| | Schälfestigkeit [N/2 cm] nach 24 h | Scherfestigkeit [h] |
|---|---|---|
| A | 7,9 | >48 |
| B | 4,1 | 3,7 |
| C | 7,3 | >48 |
| D | <0,3 | 8,0 |

## Patentansprüche

1. Wäßrige Dispersion, enthaltend ein Copolymerisat, aufgebaut aus
| | | |
|---|---|---|
| a) | 70 - 90 Gew.-% | eines C₂-C₁₀-Alkyl(meth)acrylats |
| b) | 5 - 20 Gew.-% | Methylacrylat |
| c) | 1 - 10 Gew.-% | Methylmethacrylat |
| d) | 0 - 5 Gew.-% | einer C₈-C₁₂ vinylaromatischen Verbindung |
| e) | 0,5 - 5 Gew.-% | eines C₁-C₁₀-Hydroxyalkyl(meth)acrylats |
| f) | 0,1 - 2 Gew.-% | einer ethylenisch ungesättigten C₃-C₅ Carbonsäure oder Dicarbonsäure oder deren Anhydride |
| g) | 0 - 3 Gew.-% | weiterer ethylenisch ungesättigter Verbindungen |
wobei Vinylacetat und chlorhaltige Verbindungen ausgeschlossen sind.

2. Mit einer Dispersion gemäß Anspruch 1 beschichtete Substrate.

3. Mit einer Dispersion gemäß Anspruch 1 beschichtete Klebebänder, Klebefolien oder Etiketten.

## Claims

1. An aqueous dispersion containing a copolymer comprising
| | | |
|---|---|---|
| a) | 70 - 90 % by weight | of a C₂-C₁₀-alkyl (meth)acrylate |
| b) | 5 - 20 % by weight | of methyl acrylate |
| c) | 1 - 10 % by weight | of methyl methacrylate |
| d) | 0 - 5 % by weight | of a C₈-C₁₂-vinylaromatic compound |
| e) | 0.5 - 5 % by weight | of a C₁-C₁₀-hydroxyalkyl (meth)acrylate |
| f) | 0.1 - 2 % by weight | of an ethylenically unsaturated C₃-C₅-carboxylic acid or dicarboxylic acid or anhydrides thereof |
| g) | 0 - 3 % by weight | of further ethylenically unsaturated compounds, |
vinyl acetate and chlorine-containing compounds being excluded.

2. A substrate coated with a dispersion as claimed in claim 1.

3. A self-adhesive tape, self-adhesive film or label coated with a dispersion as claimed in claim 1.

## Revendications

1. Dispersions aqueuses, contenant un copolymère composé de
| | | |
|---|---|---|
| a) | 70 - 90% | en poids d'un (méth)acrylate d'alkyle en C₂-C₁₀, |
| b) | 5 - 20% | en poids d'acrylate de méthyle, |
| c) | 1 - 10% | en poids de méthacrylate de méthyle, |
| d) | 0 - 5% | en poids d'un composé vinylaromatique en C₈-C₁₂, |
| e) | 0,5 - 5% | en poids d'un (méth)acrylate d'hydroxyalkyle en C₁-C₁₀, |
| f) | 0,1 - 2% | en poids d'un acide carboxylique ou dicarboxylique en C₃-C₅ à insaturation éthylénique ou de leurs anhydrides, |
| g) | 0 - 3% | en poids d'autres composés à insaturation éthylénique, |
à l'exclusion de l'acétate de vinyle et des composés chlorés.

2. Substrats enduits d'une couche d'une dispersion selon la revendication 1.

3. Rubans adhésifs, feuilles collantes ou étiquettes enduits d'une couche d'une dispersion selon la revendication 1.
